# FASCICULE DE BREVET EUROPEEN

(11) **EP 2 539 958 B1**
(45) Date de publication et mention de la délivrance du brevet: **16.04.2014**
(21) Numéro de dépôt: 11707128.2
(22) Date de dépôt: 22.02.2011
(51) Int. Cl.: H01Q 1/22

(54) **TERMINAL COMMUNICANT A ECRAN EQUIPE D'UNE ANTENNE TRANSPARENTE, ET PROCEDE CORRESPONDANT**
KOMMUNIKATIONSENDGERÄT MIT EINEM MONITOR MIT EINER TRANSPARENTEN ANTENNE UND ZUGEHÖRIGES VERFAHREN
COMMUNICATION TERMINAL HAVING A MONITOR PROVIDED WITH A TRANSPARENT ANTENNA, AND CORRESPONDING METHOD

(30) Priorité: 22.02.2010 FR 1051266
(43) Date de publication de la demande: 02.01.2013
(73) Titulaire: Sas Taztag, 35170 Bruz (FR)
(72) Inventeur: FOUCHARD, Eric, F-35170 Bruz (FR)
(74) Mandataire: Bioret, Ludovic
(86) Numéro de dépôt international: PCT/EP2011/052598
(87) Numéro de publication internationale: WO 2011/101488

(56) Documents cités:
- WO-A1-2009/071124
- GB-A- 2 292 482

## Description

Le domaine de l'invention est celui des terminaux aptes à communiquer sans contact avec au moins un autre dispositif communicant, par radiofréquence, et notamment, mais non exclusivement, par des communications de courte portée, de type NFC.

Selon les cas, il peut s'agir de terminaux portables, de petite taille, tels que par exemple les téléphones portables, les PDA ou les tablettes tactiles, ou de dispositifs de grande taille, le cas échéant fixes, tels que les téléviseurs, les bornes interactives, ...

De tels dispositifs sont équipés de moyens de communication, permettant de contrôler la réception et/ou l'émission de signaux de données. Ces moyens coopèrent classiquement avec une ou plusieurs antennes.

L'art antérieur WO2009/071124 décrit un système d'antenne sur un écran.

Il existe un très grand nombre de types d'antennes. Une des difficultés de la mise en oeuvre des antennes est que, pour être performantes, elles ne doivent pas être masquées, ni perturbées par des rayonnements électromagnétiques, émanant notamment des moyens électroniques équipant le terminal. Ceci pose souvent des difficultés d'installation de l'antenne à l'intérieur du dispositif, et peut conduire à une augmentation de l'encombrement.

Il est également connu de placer l'antenne à l'extérieur du terminal, mais ceci peut nuire à l'esthétique, au design, à l'encombrement, à la solidité et à la pérennité du dispositif.

Par ailleurs, notamment pour la mise en oeuvre de communications de courte portée, par exemple de type NFC ou RFID, il est souhaitable que la position de l'antenne sur le terminal soit aisément identifiable, pour que l'utilisateur d'un autre dispositif communicant puisse approcher ce dernier à quelques centimètres de l'antenne. C'est en particulier le cas lorsque les terminaux sont de grande taille, tel qu'un téléviseur, une borne interactive, un automate de pompe à essence, un terminal de paiement ou de distribution de billets, une vitrine, ...

A nouveau, on est conduit à placer l'antenne à l'extérieur du terminal, avec les inconvénients listés plus haut.

Par ailleurs, les antennes doivent être non seulement performantes, mais également de coûts d'obtention et de montage réduits, et d'encombrement et de poids les plus faibles possible.

L'invention a notamment pour objectif de pallier les différents inconvénients listés ci-dessus, ou au moins certains d'entre eux.

Plus précisément, un objectif de l'invention est de fournir une technique permettant d'équiper d'une antenne, de façon efficace et peu coûteuse, des terminaux communicants.

Ces objectifs, ainsi que d'autres qui apparaîtront par la suite, sont atteints selon l'invention à l'aide d'un terminal comprenant au moins un écran, apte à restituer des données d'images, et des moyens de communication radiofréquence avec au moins un autre dispositif communicant. Selon l'invention, ledit écran porte, sur au moins une partie de sa surface, au moins une antenne transparente, ne perturbant pas la restitution desdites données d'images, et coopérant avec lesdits moyens de communication radiofréquence, et ledit terminal comprend des moyens de génération de données indiquant la présence de ladite antenne, formant une portion desdites données d'images restituées par ledit écran.

Ainsi, selon l'invention, il est possible de disposer une antenne sur l'écran, sans que celle ne perturbe la diffusion des images. Cependant, on peut indiquer, en permanence ou en cas de besoin, et le cas échéant de façon personnalisée, la présence et l'emplacement de l'antenne. Ceci est notamment utile pour des communications à courte portée, par exemple de type NFC, pour lequel il convient d'approcher à proximité le dispositif communicant.

En d'autres termes, l'invention combine deux aspects a priori opposés : le caractère optiquement transparent, c'est-à-dire invisible, de l'antenne, et la possibilité de voir sinon l'antenne, au moins son emplacement.

Selon un mode de réalisation particulier de l'invention, ladite antenne transparente est réalisée par un dépôt d'un matériau conducteur de densité et/ou d'épaisseur telles qu'elles ne perturbent pas le trajet des rayons lumineux diffusés par ledit écran.

Il peut par exemple s'agir d'un dépôt d'argent et de titane.

Ladite antenne transparente peut notamment être formée sur un film transparent rapporté sur ledit écran.

Ce film peut être adhésif, et rapporté sur l'écran, sur sa face orientée vers l'extérieur ou sur sa face orientée vers l'intérieur du terminal.

Dans certains cas, ledit film transparent peut assurer également une fonction de protection dudit écran et/ou de détection tactile.

Lesdits moyens de communication radiofréquence peuvent assurer au moins des communications de courte portée, par exemple de type NFC.

De telles communications nécessitent, selon les réglages et les puissances utilisés, que les deux appareils communiquant ne soient pas éloignés de plus de quelques centimètres ou dizaines de centimètres. La possibilité de connaître l'emplacement de l'antenne, notamment sur des terminaux de taille importante, s'avère alors intéressante.

Lesdits moyens de communication radiofréquence peuvent également assurer moins des communications de type ZigBee^{®}, Blutooth^{®} et/ou WiFi.

Lorsque les deux types de communication sont disponibles, il peut être possible d'initier une communication via NFC, et de la poursuivre avec un autre mode de communication, autorisant des distances plus grandes et/ou des débits plus élevés.

Dans un mode de réalisation, lesdits moyens de génération de données indiquant la présence de l'antenne génèrent ou non un indicateur de présence en fonction d'au moins un critère prédéterminé.

Ainsi, il est possible de contrôler, et/ou personnaliser, l'affichage. Lorsque l'indicateur n'est pas nécessaire, ou non souhaité, il n'est pas présent. Dans ce cas, l'antenne est parfaitement invisible, et les informations restituées par l'écran ne sont pas modifiées. Lorsque l'indicateur est utile, il est inséré dans les images (selon les cas à la source ou dans le terminal).

Ledit ou lesdits critères prédéterminés peuvent notamment appartenir au groupe comprenant :
- la disponibilité de données à transmettre depuis le terminal vers au moins un autre dispositif communicant ;
- la détection de la présence d'une personne à proximité ;
- la détection de la présence d'au moins un autre dispositif communicant à proximité ;
- l'identification d'au moins un autre dispositif communiquant à proximité ;
- une plage temporelle ou une durée restante ;
- l'activation d'une fonction particulière sur ledit terminal.

Par ailleurs, ledit indicateur peut être différent et/ou variable en fonction du ou desdits critères.

Par exemple, la couleur ou l'intensité peut évoluer en fonction de la proximité du dispositif communicant ou d'un temps restant, ou être personnalisé en fonction de l'utilisateur (ou de la catégorie de l'utilisateur, telle que son appartenance à un groupe, une famille, une société, une classe d'âge,...).

L'indicateur peut comprendre un texte et/ou un logo, et/ou une séquence animée diffusée par ledit écran sous et/ou au voisinage de ladite antenne transparente.

L'invention peut notamment être mise en oeuvre dans les terminaux appartenant au groupe comprenant :
- les téléviseurs ;
- les écrans d'ordinateur ;
- les terminaux portables, tels que les appareils de radionavigation, les assistants personnels, les lecteurs de fichiers audio et/ou vidéo, les terminaux de stockage et d'échanges de données ;
- les téléphones portables ;
- les écrans embarqués dans les véhicules ;
- les automates, tels que les pompes à essence ;
- les bornes de communication publique, implantées par exemple dans les aéroports, les abribus, les syndicats d'initiative, les magasins ;
- les terminaux de paiement ;
- les vitrines.

L'invention concerne également un procédé de contrôle d'au moins un terminal selon certains modes de réalisation de l'invention, comprenant au moins un écran, apte à restituer des données d'images, et des moyens de communication radiofréquence avec au moins un autre dispositif communicant.

Un tel procédé comprend les étapes suivantes :
- détermination d'un besoin d'affichage de la présence et/ou de l'emplacement d'une antenne transparente sur ledit écran, ne perturbant pas la restitution desdites données d'images, et
- génération de données indiquant la présence de ladite antenne, formant une portion desdites données d'images restituées par ledit écran.

Selon un mode de réalisation particulier, le procédé comprend en outre une étape de :
- obtention et/ou génération d'informations à délivrer via ladite antenne, en fonction du contenu restitué sur ledit écran et/ou d'au moins une donnée relative au porteur dudit autre dispositif communicant.

D'autres caractéristiques et avantages de l'invention apparaîtront plus clairement à la lecture de la description suivante d'un mode de réalisation particulier de l'invention, donné à titre de simple exemple illustratif et non limitatif, et des dessins annexés parmi lesquels :
- la figure 1 schématiquement un terminal selon l'invention ;
- les figures 2A, 2B, 2C présentent trois variantes de mise en oeuvre de l'invention, et sont des vues de côté du terminal de la figure 1 ;
- la figure 3 est un schéma synoptique simplifié du terminal de la figure 1.

L'invention propose donc une nouvelle approche de la mise en oeuvre d'antennes sur des terminaux communicants équipés d'un écran. En effet, selon l'invention, l'antenne nécessaire aux échanges de données avec un ou plusieurs autres dispositifs communicants est assuré à l'aide d'une antenne transparente, réalisée par un dépôt de matériau conducteur sur l'écran, ou sur une surface transparente recouvrant cet écran. Toujours selon l'invention, la présence de cette antenne est indiquée, ou signalée, de façon permanente ou sélective, à l'aide d'une information adaptée (par exemple un logo et/ou une animation).

Ainsi, on dispose d'une antenne simple et efficace, placée sur l'écran sans altérer la diffusion des informations et des images restituées par cet écran. Par ailleurs, bien que l'antenne elle-même soit transparente et donc invisible, sa présence et/ou son emplacement sur le terminal peuvent être connus d'un utilisateur équipé d'un autre dispositif communicant.

Ceci est notamment utile dans le cas des communications à courte portée, de type NFC (quelques centimètres classiquement).

Par ailleurs, comme on le verra par la suite, la signalisation peut être sélective, et adaptée en fonction des besoins, selon divers critères.

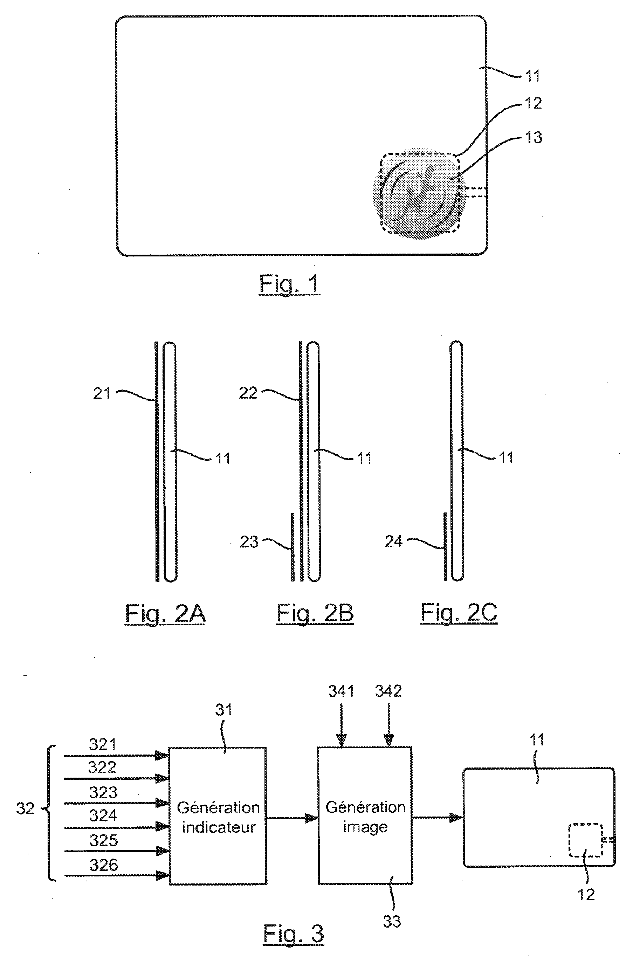

Comme on le voit sur la figure 1, qui présente schématiquement un exemple de terminal selon l'invention (en l'occurrence, un terminal de stockage et d'échange de données, développé par le demandeur, et déjà décrit dans le document de brevet FR-2 935 572).

Ce terminal présente sur sa face avant un écran 11 tactile, permettant l'affichage d'images et/ou de textes, et la saisie d'informations.

Une antenne 12 transparente (et pour cette raison représentée en pointillés) est placée dans le coin inférieur droit de l'écran 11 (la position et la surface de l'antenne étant bien entendu non contraignantes, puisque celle-ci est invisible).

Des moyens sont prévus pour insérer dans les images restituées par l'écran 11 une information 13, telle qu'un logo ou une animation, indiquant la présence et/ou l'activation de l'antenne 12. Cette indication peut être affichée en permanence, ou en cas de besoin, et le cas échéant être variable selon les conditions.

L'antenne transparente 12 est réalisé par un dépôt de matériau conducteur, avec une densité et/ou une épaisseur suffisamment faible pour ne pas perturber la transparence de son support. Selon les cas, ce support peut être comme illustré schématiquement sur les figures 2A à 2C :
- directement un film 21 ou une surface transparente de l'écran, comme illustré sur la figure 2A, ce film pouvant également assurer une fonction de détection tactile et/ou une fonction de protection de l'écran ;
- un film plastique 22 rapporté par exemple, de façon adhésive, sur le film de détection tactile 23, comme illustré sur la figure 2B;
- un film 24, par exemple adhésif, rapporté directement sur l'écran, comme illustré sur la figure 2C.

En d'autres termes, l'antenne peut être formée directement sur un élément transparent déjà constitutif du terminal, ou sur un support distinct par exemple autocollant, pour être rapporté ensuite sur l'écran ou une de ses surfaces de protection ou de détection tactile.

Une technique permettant de réaliser une telle antenne est par exemple décrite dans le document « Optically transparent monopole antenna with high radiation efficiency manufactured with silver grid layer (AgGL) » (Hautcoeur J. et al, Electronics letters, 2009, vol. 45, no20, pp. 1014-101), incorporé par référence. Cette technique propose de réaliser une double couche maillée argent / titane, imprimé sur un support transparent tel que du verre.

Une autre technique est par exemple décrite dans le document de brevet US 5872542 (incorporé par référence), proposant différents matériaux pour réaliser une antenne transparente.

Selon un mode de réalisation simplifié de l'invention, l'indication de présence de l'antenne peut être permanente. Par exemple, comme illustré sur la figure 1, le logo 13 apparaît en permanence sous l'antenne 12.

Selon une autre approche, l'affichage de cette indication peut être contrôlé par le terminal. Comme illustré sur le synoptique simplifié de la figure 3, le terminal comprend des moyens 31 de génération de l'indicateur en fonction de critères 32. En fonction de ces critères, les moyens de génération 31 contrôlent la présence ou non du logo 13 sur l'écran 11, et le cas échéant, sa modification ou son adaptation. Schématiquement, l'image à restituer est générée par des moyens 33 prévus à cet effet, par exemple en fonction de données 341 reçues d'un microprocesseur et/ou d'un signal vidéo reçu 342, tenant compte également des commandes ou signaux délivrés par les moyens 31.

Ainsi, lorsque cela n'est pas nécessaire, le logo n'est pas visible, et rien (c'est-à-dire ni le logo, ni l'antenne) ne perturbe la restitution des images et/ou des informations sur l'écran 11.

Selon un premier critère 321, l'affichage du logo 13 (ou plus généralement d'une animation, ou d'une indication, indiquant la présence de l'antenne) peut être activé lorsque le terminal dispose d'informations à transmettre vers un autre dispositif communicant. Il est en effet possible, selon les modes de réalisation, que le terminal, à un instant donné, dispose d'informations à transmettre alors qu'à d'autres instants, il n'en dispose pas. Dans ce dernier cas, il n'est bien sûr pas nécessaire d'afficher la présence de l'antenne.

Cette situation peut par exemple se rencontrer lorsque le terminal répond à une sollicitation de la part d'un utilisateur. Ainsi, par exemple, dans le cas d'une borne interactive d'une concession automobile, l'utilisateur a pu choisir sur un écran tactile un véhicule particulier. La borne interactive met alors à sa disposition le catalogue correspondant et le lui signale en indiquant la présence et l'emplacement de l'antenne. Dans cette application, notamment, la durée de mise à disposition peut être limitée, et dans ce cas l'indicateur peut varier, par exemple en clignotant, en changeant de couleur ou en s'atténuant pour signaler que le temps restant diminue.

De la même façon, par exemple dans un grand magasin, la présence de l'antenne peut être signalée au moment où des informations relatives à une promotion sont disponibles.

Selon encore un autre exemple, associé à une diffusion, par exemple télévisée ou via Internet, des informations peuvent être disponibles en fonction du contenu d'un signal vidéo 322 diffusé. Ainsi, pendant une publicité, l'annonceur peut prévoir la mise à disposition d'informations téléchargeables sur un dispositif communicant via une liaison NFC, sous la forme d'un complément publicitaire, d'un coupon de réduction, ...

Il peut également être possible de lier un tel système publicitaire à la diffusion d'un film (par exemple : affichage de l'indicateur au moment où le produit apparaît dans ce film ou pendant et/ou après la diffusion d'un message publicitaire), ou encore de télécharger des informations telles qu'un numéro de téléphone ou l'adresse d'un site Internet diffusé à l'écran. Dans tous les cas, le diffuseur, ou le concepteur du programme pourra piloter l'indicateur de présence de l'antenne, pour que celui-ci soit visible au moment souhaité. Ceci pourra se faire soit par une signalisation appropriée, que le terminal reçoit et décode, puis traite, via les moyens de génération 31, soit directement par un indicateur intégré dans le signal d'images, s'il est convenu que les antennes sont toujours placées au même endroit sur l'ensemble des terminaux.

L'activation de l'indicateur 13 peut également être fonction de la détection 323 d'un dispositif communicant à proximité. Ainsi, lorsque aucun dispositif n'est proche du terminal, la restitution des images et des informations sur l'écran n'est pas perturbée. En revanche, lorsqu'un utilisateur s'approche du terminal, avec un dispositif communicant, par exemple par NFC, le terminal peut afficher l'indicateur pour signaler qu'il est apte à communiquer, et inciter l'utilisateur à placer son dispositif communicant, à proximité.

Dans ce cas, à nouveau, l'affichage peut être variable par des couleurs, des clignotements, des intensités ou encore des indications verbales ou chiffrées, pour inciter l'utilisateur à approcher son dispositif communicant (par exemple, l'indicateur peut être rouge lorsqu'il détecte le dispositif communicant mais que celui-ci est trop éloigné pour échanger efficacement, et vert lorsque ce dernier est suffisamment près).

Selon un autre mode de réalisation, le dispositif peut détecter la présence d'une personne à proximité, par exemple à l'aide d'au moins un capteur infrarouge ou à ultrason, et activer alors l'indicateur 13. Le détecteur de présence peut également être utilisé pour lancer la diffusion d'un film ou d'un message.

L'affichage d'un indicateur peut également être lié à une identification du porteur du dispositif communicant. Par exemple, si le dispositif communicant est ou comprend une carte de fidélité, l'indicateur sera affiché si cette carte de fidélité est reconnue et valide. Il peut également s'agir d'une autorisation d'accès à des informations, par exemple via un abonnement. Par exemple, si l'utilisateur est abonné à un journal numérique, il pourra le télécharger auprès d'une borne, dont l'indicateur sera visible. Il est également possible, dans ce cas de prévoir un affichage variable, par exemple un indicateur rouge si l'utilisateur n'est pas abonné, un indicateur vert si celui-ci est abonné, et un indicateur orange si la période d'abonnement touche à sa fin.

L'identification peut également être plus personnelle, pour reconnaître personnellement le porteur, et afficher en conséquence un indicateur personnalisé (par exemple avec le nom, le pseudo, ou la photo de celui-ci) et le cas échéant, adapter en conséquence également le contenu des informations pouvant être téléchargées via l'antenne. On pourra également tenir compte de l'appartenance de l'utilisateur à un groupe identifié (famille, loisir, professionnel, région,...) et/ou à un critère associé à l'utilisateur (âge, sexe, situation de famille, centres d'intérêt, langue,...).

La mise à disposition des informations peut notamment se faire selon l'une des techniques décrites dans le document de brevet W02010136582.

Un autre critère 325 peut être un critère temporel. Ainsi, une borne interactive ou une borne de distribution d'essence par exemple, peuvent être accessibles certains jours ou à certaines heures de la journée, et non à d'autres moments. Dans ce cas, l'indicateur de présence de l'antenne indique cette disponibilité. Selon une approche similaire à celle proposée plus haut, il est également possible de prévoir des mises à disposition d'informations, par exemple des promotions pendant de courtes périodes. Pendant celle-ci l'indicateur est activé.

Enfin, le gestionnaire du terminal peut, lui-même piloter (326) l'activation ou non de l'indicateur.

Bien sûr ces différents critères peuvent être combinés, pour activer et/ou personnaliser ou adapter l'indicateur. L'invention peut être mise en oeuvre sur de nombreux types d'écrans en fonction des besoins et des applications. Notamment, elle peut être mise en oeuvre sur :
- les téléviseurs ;
- les écrans d'ordinateur ;
- les terminaux portables, tels que les appareils de radionavigation, les assistants personnels, les lecteurs de fichiers audio et/ou vidéo, les terminaux de stockage et d'échanges de données ;
- les téléphones portables ;
- les écrans embarqués dans les véhicules ;
- les automates, tels que les pompes à essence ;
- les bornes de communication publique, implantées par exemple dans les aéroports, les abribus, les syndicats d'initiative, les magasins ;
- les terminaux de paiement ;
- les vitrines, équipées de moyens de diffusion d'images.

Dans certains cas, il est possible de prévoir plusieurs antennes sur un même écran, notamment s'il est de grande taille. Ceci peut permettre, selon les modes de réalisation :
- un accès simultané à plusieurs personnes, ou un accès facilité quelle que soit la position de la personne par rapport à l'écran ;
- la délivrance d'informations différentes selon l'antenne (une antenne étant dédiée aux femmes, l'autre aux hommes, par exemple, ou à des abonnés et des non abonnés à un service, ou à un choix quelconque proposé sur l'écran,...) ;
- une mise en oeuvre ludique ou aléatoire, l'antenne active variant sur l'écran ;
- Dans certains modes de réalisation, l'antenne peut être au moins partiellement au voisinage de la zone d'affichage, dans un bord d'écran. Dans ce cas, l'indication de l'emplacement de l'antenne sur l'écran peut être adaptée, par exemple à l'aide d'une flèche.

On peut par ailleurs prévoir que l'antenne n'est active que lorsque ceci est nécessaire (et donc signalé selon l'invention) ou en permanence.

L'invention concerne également un procédé de contrôle d'un terminal tel que décrit ci-dessus, contrôlant notamment la génération des données indiquant la présence de l'antenne.

Ce procédé comprend notamment une étape de détermination d'un besoin d'affichage de la présence et/ou de l'emplacement de l'antenne et une étape d'activation de l'affichage de données, en fonction d'une commande délivrée par l'étape de détermination.

Cette étape de détermination tient compte, selon les modes de réalisation, d'une ou plusieurs informations, comme détaillé ci-dessus, pour délivrer une commande qui peut être soit de type « tout ou rien », soit de type variable (clignotement variable, sélection d'une antenne parmi plusieurs,...).

Le procédé peut par ailleurs comprendre une étape d'obtention d'informations à délivrer, via l'antenne. Ces informations peuvent être obtenues en mode « push » (les informations sont fournies dans un contenu multimédia destiné sur l'écran, ou associées à celui-ci), ou en mode « pull » (sélectionnées auprès d'un serveur, par exemple, en fonction de données obtenues via le dispositif dans lequel ces informations doivent être transférées).

## Revendications

1. Terminal comprenant au moins un écran (11), apte à restituer des données d'images, et des moyens de communication radiofréquence avec au moins un autre dispositif communicant,
**caractérisé en ce que** ledit écran (11) porte, sur au moins une partie de sa surface, au moins une antenne transparente (12), ne perturbant pas la restitution desdites données d'images, et coopérant avec lesdits moyens de communication radiofréquence,
et **en ce que** ledit terminal comprend des moyens de génération de données indiquant la présence de ladite antenne (12), formant une portion desdites données d'images restituées par ledit écran (11).

2. Terminal selon la revendication 1, **caractérisé en ce que** ladite antenne transparente (12) est réalisée par un dépôt d'un matériau conducteur de densité et/ou d'épaisseur telles qu'elles ne perturbent pas le trajet des rayons lumineux diffusés par ledit écran (11).

3. Terminal selon la revendication 2, **caractérisé en ce que** ladite antenne transparente (12) est formée sur un film (21, 22, 24) transparent rapporté sur ledit écran.

4. Terminal selon la revendication 3, **caractérisé en ce que** ledit film (21, 22, 24) est adhésif.

5. Terminal selon l'une quelconque des revendications 3 et 4, **caractérisé en ce que** ledit film (21) transparent assure également une fonction de protection dudit écran et/ou de détection tactile.

6. Terminal selon l'une quelconque des revendications 1 à 5, **caractérisé en ce que** lesdits moyens de communication radiofréquence assurent au moins des communications de courte portée, par exemple de type NFC.

7. Terminal selon l'une quelconque des revendications 1 à 6, **caractérisé en ce que** lesdits moyens de communication radiofréquence assurent au moins des communications de type ZigBee^{®} ou WiFi.

8. Terminal selon l'une quelconque des revendications 1 à 7, **caractérisé en ce que** lesdits moyens de génération de données indiquant la présence de l'antenne génèrent ou non un indicateur de présence en fonction d'au moins un critère prédéterminé.

9. Terminal selon la revendication 8, **caractérisé en ce que** ledit ou lesdits critères prédéterminés appartiennent au groupe comprenant :
- la disponibilité de données à transmettre depuis le terminal vers au moins un autre dispositif communicant ;
- la détection de la présence d'une personne à proximité ;
- la détection de la présence d'au moins un autre dispositif communicant à proximité ;
- l'identification d'au moins un autre dispositif communicant à proximité ;
- une plage temporelle ou une durée restante ;
- l'activation d'une fonction particulière sur ledit terminal.

10. Terminal selon l'une quelconque des revendications 8 et 9, **caractérisé en ce que** ledit indicateur est différent et/ou variable en fonction du ou desdits critères.

11. Terminal selon l'une quelconque des revendications 1 à 10, **caractérisé en ce que** lesdites données de signalisation comprennent une séquence animée diffusée par ledit écran sous et/ou au voisinage de ladite antenne transparente.

12. Terminal selon l'une quelconque des revendications 1 à 11, **caractérisé en ce qu'**il appartient au groupe comprenant :
- les téléviseurs ;
- les écrans d'ordinateur ;
- les terminaux portables, tels que les appareils de radionavigation, les assistants personnels, les lecteurs de fichiers audio et/ou vidéo, les terminaux de stockage et d'échanges de données ;
- les téléphones portables ;
- les écrans embarqués dans les véhicules ;
- les automates, tels que les pompes à essence ;
- les bornes de communication publique, implantées par exemple dans les aéroports, les abribus, les syndicats d'initiative, les magasins ;
- les terminaux de paiement ;
- les vitrines.

13. Procédé de contrôle d'un terminal comprenant au moins un écran (11), apte à restituer des données d'images, et des moyens de communication radiofréquence avec au moins un autre dispositif communicant,
**caractérisé en ce qu'**il comprend les étapes suivantes :
- détermination d'un besoin d'affichage de la présence et/ou de l'emplacement d'une antenne transparente (12) sur ledit écran (11), ne perturbant pas la restitution desdites données d'images, et
- génération de données indiquant la présence de ladite antenne (12), formant une portion desdites données d'images restituées par ledit écran.

14. Procédé selon la revendication 13, **caractérisé en ce qu'**il comprend en outre une étape de :
- obtention et/ou génération d'informations à délivrer via ladite antenne (12), en fonction du contenu restitué sur ledit écran et/ou d'au moins une donnée relative au porteur dudit autre dispositif communicant.

## Patentansprüche

1. Endgerät, das wenigstens einen zum Wiedergeben von Bilddaten geeigneten Bildschirm (11) und Mittel zur Radiofrequenzkommunikation mit wenigstens einer weiteren kommunizierenden Vorrichtung aufweist,
**dadurch gekennzeichnet, dass** der Bildschirm (11) auf wenigstens einem Teil seiner Oberfläche wenigstens eine transparente Antenne (12) trägt, die die Wiedergabe der Bilddaten nicht stört und mit den Mitteln zur Radiofrequenzkommunikation zusammenwirkt,
und dadurch, dass das Endgerät Mittel zum Erzeugen von Daten aufweist, die das Vorhandensein der Antenne (12) anzeigen und einen Teil der auf dem Bildschirm (11) wiedergegebenen Bilddaten bilden.

2. Endgerät nach Anspruch 1, **dadurch gekennzeichnet, dass** die transparente Antenne (12) durch eine Einlage eines leitenden Materials derartiger Dichte und/oder Dicke realisiert ist, dass sie den Strahlengang der durch den Bildschirm (11) ausgestrahlten Lichtstrahlen nicht stört.

3. Endgerät nach Anspruch 2, **dadurch gekennzeichnet, dass** die transparente Antenne (12) auf einem transparenten Film (21, 22, 24), der auf dem Schirm aufgetragen ist, gebildet ist.

4. Endgerät nach Anspruch 3, **dadurch gekennzeichnet, dass** der Film (21, 22, 24) ein Klebstoff ist.

5. Endgerät nach einem der Ansprüche 3 und 4, **dadurch gekennzeichnet, dass** der transparente Film (21) außerdem eine Bildschirmschutz- und/oder eine Tasterkennungsfunktion sicherstellt.

6. Endgerät nach einem der Ansprüche 1 bis 5, **dadurch gekennzeichnet, dass** die Mittel zur Radiofrequenzkommunikation wenigstens Kommunikationen kurzer Reichweite sicherstellen, beispielsweise der NFC-Art.

7. Endgerät nach einem der Ansprüche 1 bis 6, **dadurch gekennzeichnet, dass** die Mittel zur Radiofrequenzkommunikation wenigstens ZigBee®- oder WiFiartige Kommunikationen sicherstellen.

8. Endgerät nach einem der Ansprüche 1 bis 7, **dadurch gekennzeichnet, dass** die Mittel zum Erzeugen von Daten, die das Vorhandensein der Antenne anzeigen, eine Anzeige des Vorhandenseins als Funktion wenigstens eines vorbestimmten Kriteriums erzeugen oder nicht.

9. Endgerät nach Anspruch 8, **dadurch gekennzeichnet, dass** das oder die vorbestimmten Kriterien zur Gruppe gehören, die aufweist:
- die Verfügbarkeit von Daten zum Übertragen von der Endgerät zu wenigstens einer weiteren kommunizierenden Vorrichtung;
- die Detektion des Vorhandenseins einer sich in der Nähe befindlichen Person;
- die Detektion des Vorhandenseins wenigstens einer sich in der Nähe befindlichen weiteren kommunizierenden Vorrichtung;
- die Identifikation wenigstens einer sich in der Nähe befindlichen weiteren kommunizierenden Vorrichtung;
- ein Zeitbereich oder eine verbleibende Dauer;
- die Aktivierung einer bestimmten Funktion auf dem Endgerät.

10. Endgerät nach einem der Ansprüche 8 und 9, **dadurch gekennzeichnet, dass** die Anzeige als Funktion des oder der Kriterien verschieden und/oder variabel ist.

11. Endgerät nach einem der Ansprüche 1 bis 10, **dadurch gekennzeichnet, dass** die Anzeigedaten eine animierte Sequenz aufweisen, die durch den Bildschirm unter und/oder in Umgebung der transparenten Antenne ausgestrahlt wird.

12. Endgerät nach einem der Ansprüche 1 bis 11, **dadurch gekennzeichnet, dass** es zu der Gruppe gehört, die aufweist:
- Fernsehgeräte;
- Computermonitore;
- tragbare Endgeräte, wie zum Beispiel Radionavigationsgeräte, PDAs, Audio- und/oder Videodatenleser, Datenaustausch- und Datenspeicherendgeräte;
- tragbare Telefone;
- Bildschirme an Bord von Fahrzeugen;
- Automaten, wie zum Beispiel Zapfsäulen;
- Stellen öffentlicher Kommunikation, angesiedelt beispielsweise in Flughäfen, Bushaltestellen, Tourismusbüros, Geschäften;
- Zahlungsterminals;
- Schaukästen.

13. Verfahren zum Steuern eines Endgerätes, das wenigstens einen zum Wiedergeben von Bilddaten geeigneten Bildschirm (11) und Mittel zur Radiofrequenzkommunikation mit wenigstens einer weiteren kommunizierenden Vorrichtung aufweist,
**dadurch gekennzeichnet, dass** es die folgenden Schritte aufweist:
- Bestimmen einer Notwendigkeit das Vorhandensein und/oder die Stelle einer transparenten Antenne (12) auf dem Bildschirm (11) anzuzeigen ohne die Wiedergabe der Bilddaten zu stören und
- Erzeugen von Daten, die das Vorhandensein der Antenne (12) anzeigen und einen Teil der Bilddaten, die durch den Bildschirm wiedergegeben werden, bilden.

14. Verfahren nach Anspruch 13, **dadurch gekennzeichnet, dass** es außerdem einen folgenden Schritt aufweist:
- Erhalten und/oder Erzeugen von über die Antenne (12) zu übertragenden Informationen als Funktion des auf dem Bildschirm wiedergegebenen Inhalts und/oder wenigstens eines vom Träger der anderen kommunizierenden Vorrichtung abhängigen Datums.

## Claims

1. Terminal comprising at least one screen (11), capable of rendering image data, and radiofrequency communication means capable of communicating with at least one other communicating device,
**characterised in that** said screen (11) bears, on at least a part of its surface, at least one transparent antenna (12), not disrupting the rendering of said image data, and cooperating with said radiofrequency communication means, and **in that** said terminal comprises data generation means indicating the presence of said antenna (12), forming a portion of said image data rendered by said screen (11).

2. Terminal according to Claim 1, **characterised in that** said transparent antenna (12) is produced by depositing a conductive material with a density and/or thickness such that they do not disrupt the path of the light rays emitted by said screen (11).

3. Terminal according to Claim 2, **characterised in that** said transparent antenna (12) is formed on a transparent film (21, 22, 24) attached to said screen.

4. Terminal according to Claim 3, **characterised in that** said film (21, 22, 24) is adhesive.

5. Terminal according to either one of Claims 3 and 4, **characterised in that** said transparent film (21) also performs a function of protecting said screen and/or of touch detection.

6. Terminal according to any one of Claims 1 to 5, **characterised in that** said radiofrequency communication means ensure at least short-range communications, for example of the NFC type.

7. Terminal according to any one of Claims 1 to 6, **characterised in that** said radiofrequency communication means ensure at least communications of the ZigBee® or WiFi type.

8. Terminal according to any one of Claims 1 to 7, **characterised in that** said data generation means indicating the presence of the antenna may or may not generate a presence indicator on the basis of at least one predetermined criterion.

9. Terminal according to Claim 8, **characterised in that** said predetermined criterion or criteria belongs or belong to the group comprising:
- the availability of data to be transmitted from the terminal to at least one other communicating device;
- the detection of the presence of a person nearby;
- the detection of the presence of at least one other communicating device nearby;
- the identification of at least one other communicating device nearby;
- a time range or a remaining duration;
- the activation of a particular function on said terminal.

10. Terminal according to either one of Claims 8 and 9, **characterised in that** said indicator is different and/or variable on the basis of said criterion or criteria.

11. Terminal according to any one of Claims 1 to 10, **characterised in that** said signalling data comprise an animated sequence broadcast by said screen under and/or in the vicinity of said transparent antenna.

12. Terminal according to any one of Claims 1 to 11, **characterised in that** it belongs to the group comprising:
- televisions;
- computer screens;
- portable terminals, such as radio-navigation devices, personal assistants, audio and/or video file readers, data exchange and storage terminals;
- portable telephones;
- screens on-board vehicles;
- automated devices, such as petrol pumps;
- public communication terminals, installed, for example, in airports, bus shelters, tourist information offices, shops;
- payment terminals;
- shop windows.

13. Method for controlling a terminal comprising at least one screen (11), capable of rendering image data, and means for radiofrequency communication with at least one other communicating device,
**characterised in that** it comprises the following steps:
- determining a need to display the presence and/or the location of a transparent antenna (12) on said screen (11), not disrupting the rendering of said image data, and
- generating data indicating the presence of said antenna (12), forming a portion of said image data rendered by said screen.

14. Method according to Claim 13, **characterised in that** it further comprises a step of:
- obtaining and/or generating information to be delivered via said antenna (12), on the basis of the content rendered on said screen and/or at least one data item relating to the holder of said other communicating device.
